# EUROPEAN PATENT APPLICATION

(11) **EP 3 236 307 A1**
(43) Date of publication of application: **25.10.2017**
(21) Application number: 15868732.7
(22) Date of filing: 18.12.2015
(51) Int. Cl.: G02B 27/09, F24J 2/08

(54) **ELECTROMAGNETIC AND SOLAR ENERGY CONCENTRATOR**

(30) Priority: 19.12.2014 BR 14320348
(71) Applicant: Esteves Palmeira, André Luiz, CEP 20211-110 Cidade Nova- Rio de Janeiro- RJ (BR)
(72) Inventor: Esteves Palmeira, André Luiz, CEP 20211-110 Cidade Nova- Rio de Janeiro- RJ (BR)
(74) Representative: Office Freylinger
(86) International application number: PCT/BR2015/000193
(87) International publication number: WO 2016/094987

(57) **Abstract**

The present utility model refers to a solar and electromagnetic energy concentrator. In a preferred embodiment, the concentrator has lenses or lenses sections having a circular circumference of different diameters which are determined by the diameter of the focal point produced by the previous lens(es) no which each lens is superimposed.

## Description

### Technical Field

The present utility model refers to a solar and electromagnetic energy concentrator. More specifically, the utility model refers to an electromagnetic energy concentrator of the Sun or one or more natural and/or natural sources of electromagnetic radiation isolated or combined with other natural and/or artificial electromagnetic sources.

### Background

Concentrators have as their essential function to obtain the maximum amount of energy possible by refracting by concentrating the radiation(s) to which they are intended.

It is known that each wavelength of radiation needs a specific material to refract it. Thus, gamma radiation is only refracted by silicon, for example, which fulfills, through alignment of the atoms and/or shield shape, the magnifying and/or directing lens function. Therefore, since the lenses are made with different physicochemical compositions, the raw material of the lens should be that necessary to refract the radiation(s) for which it is intended and to withstand the conditions imposed by it.

There is a need in the prior art for concentrators which apply this principle to obtain maximum amount of energy efficiently and at a low cost.

It is necessary that the lenses exposed, for example, at high temperatures, be made of quartz glass, quartz crystal and/or other material necessary for refracting, concentrating and/or directing the radiation and withstanding high temperatures.

### Utility model description

With reference to the accompanying figures, the solar and electromagnetic energy concentrator according to the present utility model has a preferred constructive option with the magnifying and/or directing lenses sized by and positioned at the focal point(s) of the preceding or next lens(es).

In order to have a reduced production cost, the concentrator of the present utility model presents, in a preferred constructive option, the magnifying and/or directing lenses subsequent to the first lens having the same sizes as the focal point(s) produced by the preceding lens(es), or sizes close to it.

The concentrator is composed of overlapping sections of one or more lenses or adjacent shields positioned at the point or focal points produced by the preceding lens(es) section.

The concentrator shows the first lens(es) of the set as large as possible for the production of one or more focal points which are also as large as possible, that focusing on the subsequent lens(es) positioned and with the exact sizes or next to this focal point(s), will produce one or more subsequent focal points, where will have other superimposed lens(es) with the sizes and position being exact or near to the focal point produced by preceding lens(es); and so on, until it is obtained by the last lens(es) (65) of the set of subsequent superposition, in a preferred constructive option, through the last concave outer rear face, one or more parallel or convergent beams (60) of maximum power possible or suitable for the purpose for which it is intended.

In a constructive option, the concentrator has one or more of the above first receiving lenses, and one or more subsequent lens(es) superimposed and sized by the focal point produced by the first lens(es). This superposition of the first lens on the subsequent lens(es) will produce a focal point or more than one, wherein a further lens or more of a subsequent lens will be positioned, which in turn produce other focal point(s), and so on, which allows high radiation rates to be imputed in a medium, to collect or read information from this medium, to transport them, to replicate them or not through the quantity of subsequent lenses, to assemble them or not through the quantity of subsequent lenses, projecting the original information or adding more information in a medium sufficient for its materialization or reading.

Each lens(es) section is composed of one or more adjacent lenses which are positioned at the focal point or focal points of the preceding lens(es) section.

Each lens section, in the case of containing two or more lenses, divides the area of the adjacent point or focal points produced by the preceding lens(es) section. Or in the case of only one lens, it has its size and shape of the perimeter of this lens defined by the preceding focal point or preceding adjacent focal points.

Each lens section (50) is formed by two or more adjacent lenses (51) superimposed on the focal point of the preceding lens, dividing the area and the radiation of the focal point by the number of lenses therein superimposed.

Each section of adjacent (51) lenses (50) superimposed on the focal point of the preceding lens(es) concentrates its focal point on the posterior subsequent lens or posterior subsequent lens section (50) of the set.

In order to alter, increase or decrease, add or subtract radiation or information to the produced beam, the lens(es)/shield(s), in a constructive option, are charged with energy electromagnetic field(s) and/or information. The concentrator may comprise shield(s) (45) which absorbs and/or transmits information to the electromagnetic beam (55).

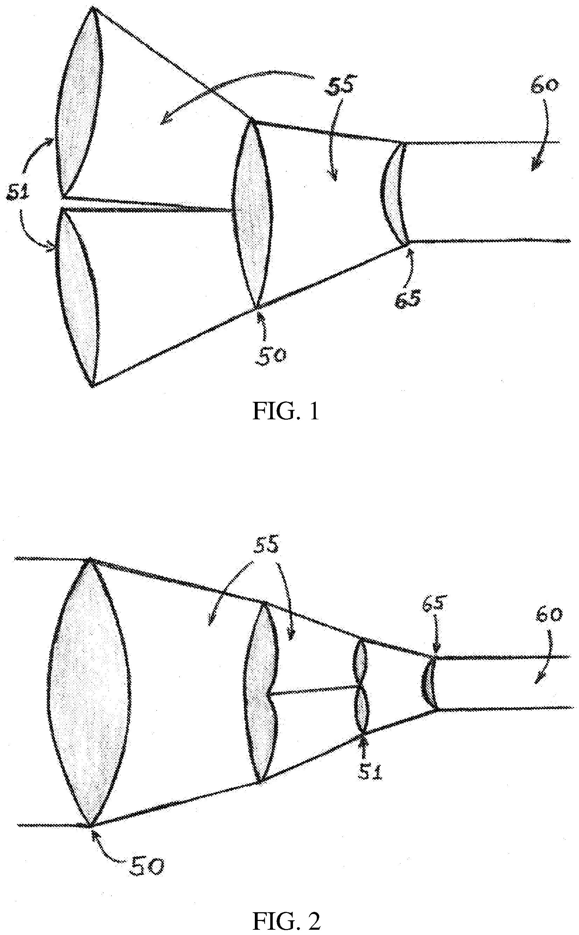

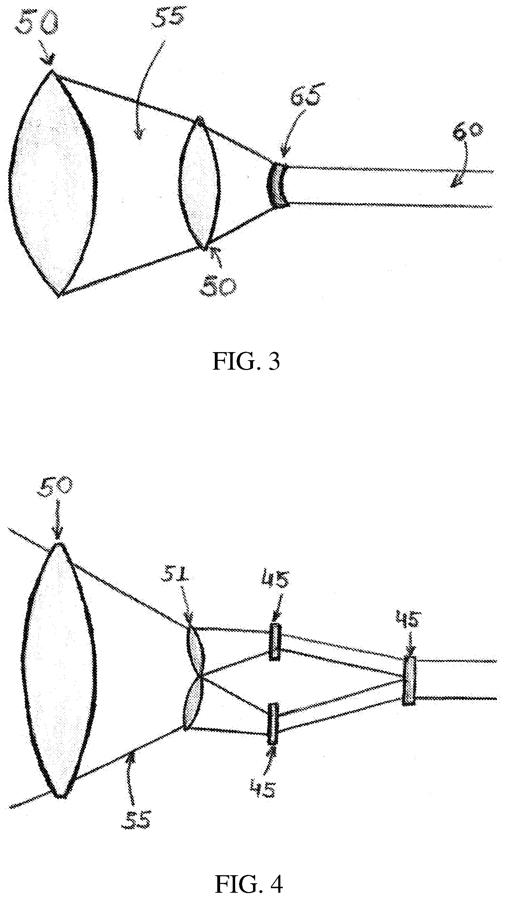

## Claims

1. Solar and electromagnetic energy concentrator (1), **characterized in that** it comprises lenses or sections of adjacent lenses (50) having different perimeters, determined by the perimeter of the focal point produced by the preceding lens or lens section, wherein another lens or lens section is overlapped.

2. Concentrator according to claim 1, **characterized in that** it comprises lenses or lens sections (50) with circumference circular shape of various diameters.

3. Concentrator according to claim 1, **characterized in that** it comprises adjacent lenses or sections (50) for magnifying and/or directing with a rectangular perimeter.

4. Concentrator according to claim 1, **characterized in that** it comprises biconvex, flat-concave, convex-concave, concave-convex, flat- convex and/or biconvex magnifying and/or directing lenses.

5. Concentrator according to claim 1, **characterized in that** it comprises lenses or sections of biconvex magnifying and/or directing lenses (50).

6. Concentrator according to claim 1, **characterized in that** the subsequent magnifying and/or directing lenses are positioned at the focal point (s) of the front lens (s) or close to it (s).

7. Concentrator according to claim 1, **characterized in that** it comprises lenses or lenses sections (50) adjacent of magnifying and/or directing, subsequent to the first, with exact perimeter or near the perimeter of the focal point, or exact perimeter or near the perimeter of the beam, produced by the adjacent lens (s) or lens sections (51).

8. Concentrator according to claim 1, **characterized in that** it has the last lens (65) of the concave back face assembly to direct one or more parallel beams (60) to the outlet of the assembly.

9. Concentrator according to claim 1, **characterized in that** it comprises lenses made of temperate glass, ceramic, quartz glass lenses, silicon lenses or different physicochemical compositions necessary to refrain the radiation to which it is intended.

10. Concentrator according to claim 1, **characterized in that** it comprises lenses for magnifying and/or directing made of necessary material to refract the radiation to which it is intended and to withstand the conditions caused by the concentration of the radiation.

11. Concentrator according to claim 1, **characterized in that** it has the latest magnification and/or steering lenses made of quartz glass or quartz crystal to withstand the high temperatures of the intended radiation.

12. Concentrator according to claim 1, **characterized in that** it comprises silicon-based screens fulfilling the function of magnifying and/or directing lenses to refract and concentrate gamma radiation.

13. Concentrator according to claim 1, **characterized in that** the section of adjacent lenses (50) overlap the point(s) produced by the front lens (s).

14. Concentrator according to claim 1, **characterized in that** it comprises overlaps of one or more adjacent biconcave magnifying and/or directing lens sections (50) forming a lens section (100).

15. Concentrator according to claim 1, **characterized in that** it comprises two or more adjacent lens sections (50) superimposed on the focal point produced by the lens or section of preceding adjacent (51) lenses (50).

16. Concentrator according to claim 1, **characterized in that** it comprises shield (s) (45) which absorbs and/or transmits information to the electromagnetic beam (55).
